# EUROPÄISCHE PATENTSCHRIFT

(11) **EP 0 685 149 B1**
(45) Veröffentlichungstag und Bekanntmachung des Hinweises auf die Patenterteilung: **30.06.1999**
(21) Anmeldenummer: 95105475.8
(22) Anmeldetag: 12.04.1995
(51) Int. Cl.: A01D 45/02

(54) **Maschine zum Mähen und Häckseln von Mais und dgl. stengelartigem Erntegut**
Machine for mowing and chopping maize and such stalk crops
Machine pour faucher et hacher le mais et les plantes à tige similaires

(30) Priorität: 03.06.1994 DE 9409012 U
(43) Veröffentlichungstag der Anmeldung: 06.12.1995
(73) Patentinhaber: Maschinenfabrik Kemper GmbH & Co. KG, 48703 Stadtlohn (DE)
(72) Erfinder: Bertling, Alfred, Dipl.-Ing., D-48703 Stadtlohn (DE)
(74) Vertreter: Busse & Busse Patentanwälte

(56) Entgegenhaltungen:
- DE-A- 4 002 344
- DE-A- 4 111 891
- GB-A- 2 033 715

## Beschreibung

Die Erfindung betrifft eine Maschine zum Mähen und Häckseln von Mais und dgl. stengelartigem Erntegut nach dem Oberbegriff des Patentanspruchs 1. Solche Maschinen werden häufig auch kurz als Maismähhäcksler bezeichnet.

Bei einer bekannten derartigen Maschine (DE-OS 41 11 981 A1), die die Stengel des Ernteguts in aufrechter Stellung einzieht und mäht und anschließend dem Häckselgebläse mit den vorgeschalteten Einschubwalzen zuführt, ist durch die Mehrzahl der über den vorderen Arbeitsbereich der Maschine verteilt ausgebildeten Einzugs- und Schnittstellen eine von Reihenabstand und Reihenrichtung des Ernteguts unabhängige Arbeitsweise erreicht, so daß die Maschine auch bei Breitsaat, vergleichbar einem Mähdrescher im Getreide, einsetzbar ist. Durch die vorgesehenen Schrägfördertrommeln wird auf einfache Weise der Höhenunterschied zwischen der Arbeitsebene der Einzugs- und Mähvorrichtungen und der vom Einführungsspalt der Einschubwalzen eingenommenen horizontalen Ebene überbrückt. Dabei wird das geschnittene Erntegut von den Schrägfördertrommeln, die einen kleineren Durchmesser als die ihrerseits trommelförmigen Einzugs- und Mähvorrichtungen aufweisen können, sicher erfaßt und dem Einführungsspalt der Einschubwalzen zügig zugeführt, um sodann unmittelbar vom Häckslergebläse zerkleinert zu werden.

Im Betrieb der bekannten Maschine hat sich jedoch gezeigt, daß sich in Abhängigkeit vom Erntegut Schwierigkeiten beim Transport des geschnittenen Ernteguts von den äußeren Einzugs- und Mähvorrichtungen über die auch als Überführungsorgane wirkenden zwei inneren Einzugs- und Mähvorrichtungen zu den Schrägfördertrommeln auftreten können, die in erster Linie darauf zurückzuführen sind, daß die anfallende Menge des Ernteguts allein über die beiden inneren Einzugs- und Mähvorrichtungen zu den Schrägfördertrommeln transportiert wird. Da die inneren Einzugs- und Mähvorrichtungen zudem einen kleineren Durchmesser als die äußeren Einzugs- und Mähvorrichtungen aufweisen, kommt es leicht zu einer Überlastung dieser inneren Einzugs- und Mähvorrichtungen durch die große Menge des von den äußeren Einzugs- und Mähvorrichtungen geschnittenen und zugeführten Ernteguts, insbesondere dann, wenn sich das Erntegut durch eine hohe Dichte auszeichnet. Um derartige Belastungen zu vermeiden, ist dann das Arbeiten mit einer niedrigeren Arbeitsgeschwindigkeit erforderlich.

Der Erfindung liegt daher die Aufgabe zugrunde, eine Maschine zum Mähen und Häckseln von Mais und dgl. stengelartigem Erntegut zu schaffen, bei der jedes stengelartige Erntegut sicher und schnell von den Einzugs- und Mähvorrichtungen an die Schrägfördertrommeln vor den Einschubwalzen des Häckselgebläses in gebündelter bzw. zusammengefaßter Form überführt werden kann.

Ausgehend von einer Maschine der eingangs genannten Art wird diese Aufgabe nach der Erfindung durch die im kennzeichnenden Teil des Patentanspruchs 1 angegebenen Merkmale gelöst. Weitere Merkmale und vorteilhafte Einzelheiten der Erfindung ergeben sich aus den Unteransprüchen.

Durch die Erweiterung der bisherigen zwei inneren Einzugs- und Mähvorrichtungen auf vier Einzugs- und Mähvorrichtungen, wodurch sich insgesamt die Zahl von sechs Einzugs- und Mähvorrichtungen ergibt, ist die Voraussetzung geschaffen, daß jeweils eine Schrägfördertrommel zwei Einzugs- und Mähvorrichtungen zugeordnet werden kann. Hierdurch ist es möglich, daß von den beiden Einzugs- und Mähvorrichtungen, die eine Schrägfördertrommel beschicken, nur eine als Überführungsorgan für das von der äußersten Einzugs-und Mähvorrichtung geschnittene Erntegut fungiert. Die direkt an die vertikale Längsmittelebene der Maschine angrenzende Einzug-- und Mähvorrichtung dient dagegen nur zum Mähen und Einzug des von ihr selbst geschnittenen Ernteguts. Somit wird das geschnittene Erntegut auf zwei Einzugs- und Mähvorrichtungen verteilt, wodurch eine gleichmäßige Zuführung des Ernteguts an eine Schägfördertrommel ermöglicht ist, so daß Spitzenbelastungen vermieden werden können. Die jeweilige Schrägfördertrommel kann das ihr von den beiden Einzugs- und Mähvorrichtungen zugeführte Erntegut sicher erfassen und dem Einführungsspalt der Einschubwalten zügig zuführen. Hierdurch wird ein Arbeiten mit einer hohen Arbeitsgeschwindigkeit ermöglicht, die unabhängig von auftretenden Dichteschwankungen des zu mähenden Erntegutes ist.

In der nachstehenden Beschreibung ist die Erfindung anhand einer Zeichnung näher erläutert, in der ein Ausführungsbeispiel des Gegenstands der Erfindung schematisch dargestellt ist.

In der Zeichnung zeigen:
- Fig. 1: eine Draufsicht auf eine Ausführungsform des Arbeitsteils der Maschine mit sechs Einzugs- und Mähvorrichtungen.

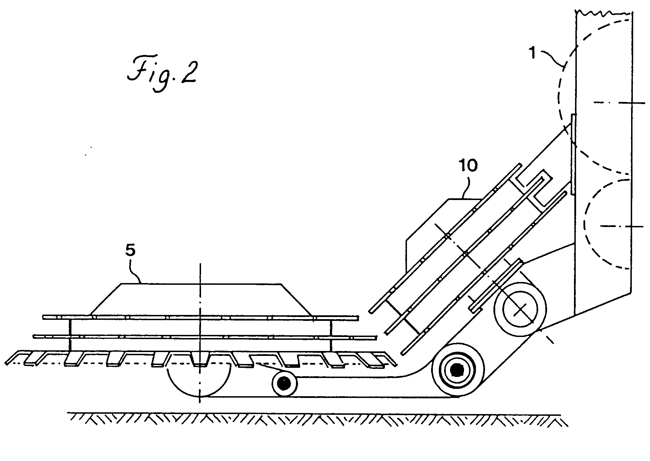

- Fig. 2: einen vertikalen Schnitt durch die Maschine in etwa nach Linie II-II in Fig. 1;

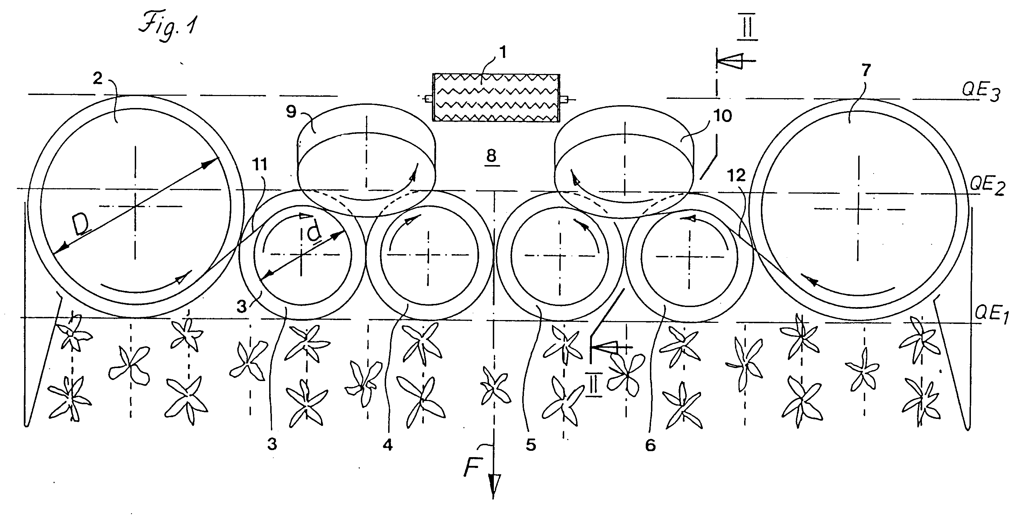

Die gemäß Fig. 1 in Arbeits- bzw. Fahrtrichtung - Pfeil F- vorbewegte Maschine weist ein - hier nicht gezeigt - quer zur Fahrtrichtung F angeordnetes Häckselgebläse 1 auf, dem Einschubwalzen 1 vorgeordnet sind. Von dem vorderen Einschubwalzenpaar 1 wird ein Einführungsspalt für das geschnittene Erntegut definiert, durch den das zugeführte Erntegut in das nicht näher dargestellte Gehäuse des Häckselgebläses gelangt, wo es zerkleinert und ggf. über einen tangentialen Auswurfkanal nach oben ausgeblasen wird. Die Maschine kann als Anbaugerät für einen Schlepper oder aber auch als Selbstfahrer ausgebildet sein.

Zur Beschickung des Häckselgebläses mit Erntegut, z.B. Mais, sind diesem in Fahrtrichtung F sechs Einzugs- und Mähvorrichtungen 2,3,4,5,6,7 mit von mehreren über den vorderen Arbeitsbereich verteilten Schnittstellen gebildeten, nebeneinander liegenden Einzel-Arbeitsbreiten vorgeordnet.

Jede der Einzugs- und Mähvorrichtungen 2 bis 7 besteht aus einem um eine vertikale oder zumindest im wesentlichen vertikale Achse umlaufenden Rotatioskörper in Form eines geschlossenen Hohlkörpers mit einem zylindrischen Mantel. Nähere Einzelheiten der Einzugs- und Mähvorrichtungen sind in der DE-OS 41 11 981 beschrieben. Die sechs Einzugs- und Mähvorrichtungen 2 bis 7 sind mit ihren in Fahrtrichtung voraus laufenden Umfangspunkten in einer gemeinsamen vertikalen Querebene QE₁ der Maschine angeordnet, jedoch weisen die inneren Einzugs- und Mähvorrichtungen 3,4,5,6 einen gegenüber dem Durchmesser D der äußeren Einzugs- und Mähvorrichtungen 2 und 7 verkleinerten Durchmesser d auf. Das Durchmesserverhältnis d : D kann im Bereich von 1:1,5 bis 1:2 liegen und beträgt bei dem hier dargestellten Beispiel etwa 1:1,9.

Auf diese Weise ist zwischen den beiden Querebenen QE₂ und QE₃ der Maschine, die von den in Fahrtrichtung nachlaufenden Umfangspunkten der inneren Einzugs- und Mähvorrichtungen 3,4,5,6 sowie der äußeren Einzugs-und Mähvorrichtungen 2 und 7 definiert sind, ein Freiraum 8 gebildet, in dem zwischen den vier inneren Einzugs- und Mähvorrichtungen 3,4,5,6 und den Einschubwalzen 1 des Häckselgebläses jeweils eine Schrägfördertrommel 9,10 an einem Traggestell abgestützt ist, die den vertikalen Abstand zwischen der im wesentlichen horizontalen Arbeitsebene der Einzugs- und Mähvorrichtungen 2 bis 7 und der ihrerseits im wesentlichen horizontalen Ebene, in der der Einführungsspalt der Einschubwalzen 1 liegt, überbrücken. Die Schrägfördertrommeln 9,10 sind spiegelsymmetrisch beidseits der vertikalen Längsmittelebene der Maschine angeordnet, und zwar jeweils oberhalb zwischen den paarweise rechts und links der vertikalen Längsmittelebene der Maschine angeordneten inneren Einzugs- und Mähvorrichtungen 3,4 und 5,6, so daß Schrägfördertrommeln 9 bzw. 10 jeweils mit einem Paar von Einzugs- und Mähvorrichtungen 3,4 bzw. 5,6 in Eingriff kommt. Ihr Durchmesser ist so gewählt, daß eine optimale Anpassung an den Umfang der beiden Einzugs- und Mähvorrichtungen 3,4 bzw. 5,6 gegeben ist, wodurch eine zügige Übernahme des Ernteguts erreicht wird. Die Einschubwalzen 1 sind an den Umfang der Schrägfördertrommeln 9,10 angrenzend angeordnet. Bezüglich der näheren Ausgestaltung der Schrägfördertrommeln 9,10 sei gleichfalls auf die DE-OS 41 11 981 verwiesen.

Zweckmäßig ist im übrigen im Bereich zwischen den äußeren Einzugs- und Mähvorrichtungen 2,7 und den mittleren Einzugs- und Mähvorrichtungen 3,6 jeweils ein geradliniger Abstreifer 11,12 im umfangseitigen Berührungsbereich angeordnet, so daß bei entsprechend gegenläufig angetriebenen Rotoren , wie dies in der Zeichnung durch die Pfeile angedeutet ist, von den äußeren Einzugs-und Mähvorrichtungen 2,7 geschnittenes Erntegut den mittleren Einzugs- und Mähvorrichtungen 3,6 zugeführt wird. Die beiden mittleren Einzugs- und Mähvorrichtungen 3,6 dienen insoweit auch als Überführungsorgane für das von den äußeren Einzugs- und Mähvorrichtungen 2,7 geschnittene Erntegut. Von den inneren Einzugs- und Mähvorrichtungen 3,4 einerseits und 5,6 andererseits gelangt das von sämtlichen Einzugs- und Mähvorrichtungen 2 bis 7 geschnittene Erntegut zu den Schrägfördertrommeln 9 und 10, die es ihrerseits übernehmen und bei ihrer angegebenen Drehrichtung den Einschubwalzen 1 zufördern.

Somit wird von den mittleren Einzugs- und Mähvorrichtungen 3,6 sowohl das von ihnen geschnittene Erntegut als auch das von den äußeren Einzugs- und Mähvorrichtungen 2,7 geschnittene Erntegut den Schrägfördertrommeln 9,10 zugeführt, während die inneren Einzugs- und Mähvorrichtungen 3,4 jeweils nur das von ihnen selbst geschnittene Erntegut den Schrägfördertrommeln 9,10 zuführen. Hierdurch wird insgesamt eine gleichmäßige Beschickung der Schrägfördertrommeln 9,10 erreicht.

## Patentansprüche

1. Maschine zum Mähen und Häckseln von Mais und dgl. stengelartigem Erntegut, bei der innerhalb ihrer von zwei seitlichen Führungen begrenzten Gesamtarbeitsbreite mehrere um im wesentlichen vertikale Achsen rotierende, mit abstehenden Mitnehmerzähnen versehene Einzugs- und Mähvorrichtungen (2 bis 7) beidseits der vertikalen Längsmittelebene der Maschine einem Häckselgebläse vorgeordnet sind und jeweils eine Mehrzahl von über den vorderen Arbeitsbereich verteilten Einzugs- und Schnittstellen ausbilden, die jeweils durch im Bereich zwischen dem Kopf- und dem Grundkreis der Mitnehmerzähne verlaufende Führungsteile überbrückt sind, wobei dem Häckselgebläse zu seiner Beschickung mit dem geschnittenen Erntegut Einschubwalzen vorgeordnet sind, die einen in einer mit Abstand oberhalb der Arbeitsebene der Einzugs-und Mähvorrichtungen liegenden horizontalen Ebene verlaufenden Einführungsspalt für das Erntegut bilden, wobei im Bereich zwischen den Einzugs- und Mähvorrichtungen und den an diese angrenzenden, den Einführungsspalt definierenden Einschubwalzen zwei den vertikalen Abstand zwischen der Arbeitsebene der mittleren Einzugs- und Mähvorrichtungen und der Einführungsspaltebene überbrückende Schrägfördertrommeln beidseits der vertikalen Längsmittelebene der Maschine in einer Anordnung und Ausgestaltung zur Übernahme des Erntegutes von den Einzugs- und Mähvorrichtungen und zu dessen Einspeisung in den Einführungsspalt angeordnet sind, **dadurch gekennzeichnet**, daß sechs, bezüglich der vertikalen Längsmittelebene symmetrisch angeordnete Einzugs-und Mähvorrichtungen (2,3,4,5,6,7) vorhanden sind, und daß die beiden Schrägfördertrommeln (9,10) den vier inneren Einzugs- und Mähvorrichtungen (3,4,5,6) zugeordnet sind, wobei die paarweise links und rechts der Längsmittelebene angrenzenden Einzugs- und Mähvorrichtungen (3,4;5,6) jeweils eine Schrägfördertrommel (9;10) beschicken.

2. Maschine nach Anspruch 1, dadurch gekennzeichnet, daß die sechs Einzugs-und Mähvorrichtungen (2,3,4,5,6,7) mit ihren in Fahrtrichtung vorauslaufenden Umfangspunkten in einer gemeinsamen vertikalen Querebene der Maschine angeordnet sind.

3. Maschine nach Anspruch 1 oder 2, dadurch gekennzeichnet, daß die vier inneren Einzugs- und Mähvorrichtungen (3,4,5,6) einen gegenüber dem der äußeren Einzugs- und Mähvorrichtungen (2,7) verkleinerten Durchmesser aufweisen, derart, daß zwischen den von den in Fahrtrichtung nachlaufenden Umfangspunkten der äußeren und der inneren Einzugs- und Mähvorrichtungen definierten Querebenen der Maschine ein Aufnahmeraum (8) gebildet ist, in dem die Schrägfördertrommeln (9,10) untergebracht sind.

4. Maschine nach einem der Ansprüche 1 bis 3, dadurch gekennzeichnet, daß das Durchmesserverhältnis der vier inneren Einzugs- und Mähvorrichtungen (3,4,5,6) zu den beiden äußeren Einzugs- und Mähvorrichtungen (2,7) im Bereich von 1:1,5 bis 1:2 liegt.

5. Maschine nach einem der Ansprüche 1 bis 4, dadurch gekennzeichnet, daß im umfangseitigen Berührungsbereich zwischen den mittleren Einzugs-und Mähvorrichtungen (4,5) und den äußeren Einzugs- und Mähvorrichtungen (2,7) je ein geradliniger Abstreifer (11,12) angeordnet ist.

## Claims

1. A machine for mowing and chopping maize and like stalk crops in which, within its overall working width which is bounded by two lateral guides, there are a plurality of draw-in and mowing devices provided with projecting drive teeth and rotating about substantially vertical axes upstream of a chaff blower and on both sides of the vertical longitudinal central plane through the machine and each forming a plurality of draw-in and cutting stations distributed over the front part of the working area, the said draw-in and cutting stations being respectively bridged by guide parts extending between the addendum line and the base circle of the drive teeth, push-in rollers being disposed upstream of the chaff blower in order to feed it with the cut crop, the said push-in rollers forming a crop intake gap extending on a horizontal plane situated at a distance above the working plane of the draw-in and mowing devices whereby in the area between the draw-in and mowing devices and the push-in rollers adjacent to them and defining the intake gap there are, bridging the vertical gap between the working plane of the central draw-in and mowing devices and the plane of the intake gap, oblique delivery drums on both sides of the vertical longitudinal central plane through the machine in an arrangement and design adapted to take over the crop from the draw-in and mowing devices and to feed it into the intake gap, characterised in that, disposed symmetrically in relation to the vertical longitudinal central plane are six draw-in and mowing devices (2, 3, 4, 5, 6, 7) and in that both oblique delivery drums (9, 10) are associated with the four inner draw-in and mowing devices (3, 4, 5, 6), the draw-in and mowing devices (3, 4, 5, 6) adjacent to and disposed in pairs on the left and right of the longitudinal central plane respectively feeding one oblique delivery drum (9, 10).

2. A machine according to claim 1, characterised in that of the six draw-in and mowing devices (2, 3, 4, 5, 6, 7), their peripheral points which are in front in the direction of travel are disposed in a common vertical transverse plane of the machine.

3. A machine according to claim 1 or 2, characterised in that the four inner draw-in and mowing devices (3, 4, 5, 6) have a smaller diameter than the outer draw-in and mowing devices (2, 7) so that there is formed between the transverse planes of the machine as defined by those peripheral points of the outer and inner draw-in and mowing devices which are trailing in the direction of travel a receiving space (8) in which the oblique delivery drums (9, 10) are accommodated.

4. A machine according to one of claims 1 to 3, characterised in that the ratio of diameters of the four inner draw-in and mowing devices (3, 4, 5, 6) in respect of the two outer draw-in and mowing devices (2, 7) lies in the range from 1:1.5 to 1:2.

5. A machine according to one of claims 1 to 4, characterised in that in the peripheral area of contact between the central draw-in and mowing devices (4, 5) and the outer draw-in and mowing devices (2, 7) there is in each case a straight scraper (11, 12).

## Revendications

1. Machine pour faucher et hacher le maïs et les plantes à tige similaires, dans laquelle plusieurs dispositifs de saisie et de fauche (2 à 7) pourvus de dents d'entraînement saillantes et tournant autour d'axes sensiblement verticaux sont agencés à l'intérieur de sa largeur de travail totale de la machine délimitée par deux guides latéraux, devant une souffleuse pour fourrage haché, de part et d'autre du plan médian longitudinal vertical de la machine, et forment à chaque fois une pluralité d'endroits de saisie et de coupe répartis sur la surface de travail avant, qui sont à chaque fois surmontés par des organes de guidage qui s'étendent dans la zone séparant le cercle de tête et le cercle de base des dents d'entraînement, étant entendu que des cylindres d'introduction sont montés en amont de la souffleuse pour fourrage haché en vue de son alimentation avec les plantes coupées, lesquels cylindres forment une fente d'alimentation pour les plantes qui s'étend dans un plan horizontal situé à distance au-dessus du niveau de travail des dispositifs de saisie et de fauche, et que, dans la zone entre les dispositifs de saisie et de fauche et les cylindres d'introduction adjacents à ceux-ci qui définissent la fente d'alimentation, deux tambours transporteurs obliques couvrant l'écartement vertical entre le niveau de travail des dispositifs de saisie et de fauche médians et le niveau de la fente d'alimentation sont agencés de part et d'autre du plan médian longitudinal vertical de la machine selon un agencement et un aspect de réalisation prévus pour recevoir les plantes provenant des dispositifs de saisie et de fauche et à les acheminer dans la fente d'alimentation, caractérisée en ce que six dispositifs de saisie et de fauche (2, 3, 4, 5, 6, 7) agencés symétriquement par rapport au plan médian longitudinal vertical sont prévus, et en ce que les deux tambours transporteurs obliques (9, 10) sont adjoints aux quatre dispositifs intérieurs de saisie et de fauche (3, 4, 5, 6), les dispositifs de saisie et de fauche (3, 4; 5, 6) adjacents par paires à gauche et à droite du plan médian longitudinal alimentant à chaque fois un tambour transporteur oblique (9, 10).

2. Machine suivant la revendication 1, caractérisée en ce que les six dispositifs de saisie et de fauche (2, 3, 4, 5, 6, 7) sont agencés de façon que leurs points de circonférence se trouvant en avant dans le sens de marche se situent dans un plan transversal vertical commun de la machine.

3. Machine suivant la revendication 1 ou 2, caractérisée en ce que les quatre dispositifs intérieurs de saisie et de fauche (3, 4, 5, 6) présentent un diamètre réduit par rapport à celui des dispositifs extérieurs de saisie et de fauche (2, 7), de telle sorte que, entre les plans transversaux de la machine définis par les points de circonférence se trouvant en arrière dans le sens de marche des dispositifs extérieurs et intérieurs de saisie et de fauche, un espace de réception (8) est formé dans lequel sont installés les tambours transporteurs obliques (9, 10).

4. Machine suivant l'une quelconque des revendications 1 à 3, caractérisée en ce que le rapport entre les diamètres des quatre dispositifs intérieurs de saisie et de fauche (3, 4, 5, 6) et des deux dispositifs extérieurs de saisie et de fauche (2, 7) se situe dans l'intervalle de 1 : 1,5 à 1 : 2.

5. Machine suivant l'une quelconque des revendications 1 à 4, caractérisée en ce qu'un organe de débourrage droit (11, 12) est agencé à chaque fois dans la zone de contact périphérique entre les dispositifs médians de saisie et de fauche (4, 5) et les dispositifs extérieurs de saisie et de fauche (2, 7).
